# EUROPÄISCHE PATENTSCHRIFT

(11) **EP 2 606 264 B1**
(45) Veröffentlichungstag und Bekanntmachung des Hinweises auf die Patenterteilung: **14.01.2015**
(21) Anmeldenummer: 11740849.2
(22) Anmeldetag: 02.08.2011
(51) Int. Cl.: F16K 15/06, F16K 31/122, F16K 31/124, F17D 1/04

(54) **RÜCKSCHLAGVENTIL**
CHECK VALVE
CLAPET ANTI-RETOUR

(30) Priorität: 19.08.2010 DE 102010034867
(43) Veröffentlichungstag der Anmeldung: 26.06.2013
(73) Patentinhaber: Dürr Dental AG, 74321 Bietigheim-Bissingen (DE)
(72) Erfinder: DEUBLER, Alfred, 71691 Freiberg (DE)
(74) Vertreter: Schwanhäußer, Gernot
(86) Internationale Anmeldenummer: PCT/EP2011/003861
(87) Internationale Veröffentlichungsnummer: WO 2012/022432

(56) Entgegenhaltungen:
- DE-A1- 3 404 982
- GB-A- 190 925 123
- US-A- 2 516 247
- US-A- 4 312 376

## Beschreibung

Die Erfindung betrifft ein Rückschlagventil mit
- einem Ventilgehäuse, welches einen Einlass, einen Auslass und einen Ventilkanal aufweist, der einen Ventilsitz umfasst und den Einlass mit dem Auslass verbindet,
- einem Verschlussteil, das mit dem Ventilsitz zusammenarbeitet, und
- einem Stößel, der das Verschlussteil trägt,
wobei
- ein vom Verschlussteil abgelegenes Ende des Stößels einen Steuerkolben trägt und
- der Steuerkolben zusammen mit einer Zylinderwand eine Steuerkammer begrenzt.

Ein derartiges Rückschlagventil ist in der US 2,516,247 A beschrieben. Darin wird ein einer Flüssigkeitspumpe nachgeschaltetes Rückschlagventil beschrieben, bei welchem ein auf das Verschlussteil wirkender Steuerkolben in einer Steuerkammer läuft. Das Verschlussteil ist so ausgestaltet, dass der Rückfluss der Flüssigkeit das Rückschlagventil schließt, sobald die Flüssigkeitspumpe deaktiviert wird. Um den mit einem zu schnellen Schließen verbundenen Anschlag des Verschlussteils am Ventilsitz zu verhindern, wird dabei die Steuerkammer über eine Drossel in den Ventilkanal entleert, wodurch die Bewegung des Steuerkolbens und damit die Bewegung des Verschlussteils gebremst wird.

Ähnliche Rückschlagventile sind in der, US 4,312,376 A, der DE 34 04 982 A1 und der GB 25123 A beschrieben.

Die Erfindung betrifft ferner ein Verfahren zum Betreiben einer Druckluftversorgungseinheit.

Eine Druckluftversorgungseinheit, die beispielsweise in einem dentalmedizinischen Arbeitsplatz zur Bereitstellung von Druckluft verwendet wird, weist einen Druckspeicher auf, der mit Hilfe eines Kompressors befüllt wird. Wird aus dem Druckspeicher Druckluft entnommen, so sinkt der Druck der im Druckspeicher enthaltenen Luft, sodass bei Unterschreiten eines vorgebbaren Mindestdrucks ein mit dem Druckspeicher verbundener Druckschalter den Kompressor in Gang setzt, um den Druckspeicher erneut zu befüllen.

Zwischen dem Druckspeicher und dem Kompressor ist dabei ein Rückschlagventil eingangs genannter Art vorgesehen, das verhindert, dass bei ausgeschaltetem Kompressor die Druckluft entgegen der Förderrichtung des Kompressors aus dem Druckspeicher entweicht.

Bisher bekannte Rückschlagventile umfassen dazu Verschlussteile, die mit Hilfe einer Feder an einen Ventilsitz angedrückt werden. Sobald der am Verschlussteil einlassseitig anliegende Druck die Federkraft übersteigt, öffnet das Rückschlagventil und die Luft kann vom Kompressor zum Druckspeicher gefördert werden.

Eine derartige Konstruktion stellt ein Feder-Masse-System dar, das ein Eigenschwingverhalten aufweist, welches durch Druckschwankungen im Luftstrom zu Schwingungen angeregt werden kann. Insbesondere Kolbenkompressoren erzeugen häufig einen Luftstrom, der mit der Drehfrequenz des Antriebsmotors mehr oder weniger stark pulsiert, sodass das Verschlussteil des Rückschlagventils während des Betriebs des Kompressors je nach anstehendem Druck mehr oder weniger stark auf den Ventilsitz hämmert, was zu störender Ge- räuschentwicklung führen kann. Dies ist insbesondere bei der Verwendung der Druckluftversorgungseinheit in einer Pa- tientenumgebung wie im Falle eines dentalmedizinischen Ar- beitsplatzes unerwünscht.

Es ist daher Aufgabe der Erfindung, ein Rückschlagventil der eingangs genannten Art zur Verfügung zu stellen, bei welchem die Geräuschentwicklung vermindert ist.

Es ist weiter Aufgabe der Erfindung ein Verfahren zum Be- trieb einer Druckluftversorgungseinheit anzugeben, bei wel- chem die Geräuschentwicklung vermindert ist.

Diese Aufgabe ist durch ein Rückschlagventil der eingangs genannten Art gelöst, bei dem
- die Steuerkammer mit einem Steueranschluss zum Entlüften der Steuerkammer in Verbindung steht, und
- die Steuerkammer über einen Verbindungskanal, dessen Querschnitt so gewählt ist, dass er als Drossel wirkt, mit dem Ventilkanal verbunden ist, wodurch beim Entlüften über den Steueranschluss der Druck in der Steuerkammer schneller abfällt als im Ventilkanal

Ein solches Eigenmedium-betätigtes Rückschlagventil ist ein steuerbares Rückschlagventil, bei welchem das Verschlussteil bistabil mit Hilfe des Steuerkolbens zwischen zwei unterschiedlichen Lagen hin- und herbewegt werden kann. Erhöht sich einlassseitig der Druck im Ventilkanal beispielsweise durch Anschalten eines vorgeschalteten Kompressors, so tritt das durch das Rückschlagventil hindurchtretende Medium, meist Druckluft, über den Verbindungskanal in die Steuerkammer ein. Eine dann stirnseitig auf den Steuerkolben wirkende Kraft bewegt das Verschlussteil zwangsläufig in eine geöffnete Stellung. Der Querschnitt des Verbindungskanals kann dabei so klein gewählt werden, dass der Druck in der Steuerkammer trotz der Druckschwankungen am Einlass des Rückschlagventils weitgehend konstant bleibt, sodass das Verschlussteil in der geöffneten Stellung verharrt.

Ein weiterer Vorteil des Rückschlagventils betrifft die Entlüftung der Druckleitung. Die zwischen Rückschlagventil und Auslass des Kompressors liegenden Komponenten und Verbindungsleitungen werden nämlich bei abgeschaltetem Kompressor zwangsentlüftet, damit der Kompressor beim Wiedereinschalten gut anlaufen kann.

Beim erfindungsgemäßen Rückschlagventil kann die Entlüftung am Rückschlagventil über den Steueranschluss und die Steuerkammer erfolgen. Durch Entlüften der Steuerkammer schließt sich das Verschlussteil, wobei noch anliegende Druckkräfte auf der von der Steuerkammer abliegenden Stirnfläche des Steuerkolbens ein sicheres Schließen des Verschlussteils garantieren.

Eine Geräuschentwicklung tritt somit gemäß der Erfindung nur einmalig beim Öffnen und einmalig beim Schließen des Ventils auf.

Nach einer Weiterbildung der Erfindung ist vorgesehen, dass der Steuerkolben mit seiner stößelseitigen Stirnfläche mit dem Ventilkanal kommuniziert.

Dadurch, dass der Steuerkolben an der von der Steuerkammer abgelegenen Seite mit dem Druck beaufschlagt wird, der einlassseitig am Ventilkanal anliegt, wird das Verschlussteil zwangsweise geschlossen, sobald die Steuerkammer entlüftet wird. Der relativ kleine Querschnitt des Verbindungskanals wirkt dabei als Drossel, sodass der Druck in der Steuerkammer schneller abfällt als im Ventilkanal.

Nach einer Weiterbildung der Erfindung ist vorgesehen, dass der Verbindungskanal eine Rückströmsperre aufweist, die ein Rückströmen von Medium von der Steuerkammer in den Ventilkanal verhindert.

Nach einer Entlüftung der Steuerkammer befindet sich in dieser Umgebungsluft unter entsprechendem Umgebungsluftdruck. Durch die Rückströmsperre wird verhindert, dass diese ungereinigte Luft oder ungetrocknete Luft in das Innere des Druckspeichers gelangt. Weiter verhindert die Rückströmsperre, dass das Medium aufgrund eines Druckabfalls im Ventilkanal, der beispielsweise nach dem Öffnen des Verschlussteils zum Druckspeicher auftreten kann, von der Steuerkammer zurück in den Ventilkanal gelangt.

Nach einer Weiterbildung der Erfindung ist vorgesehen, dass der Verbindungskanal die Steuerkammer über den Steuerkolben mit dem Ventilkanal verbindet.

Dies stellt eine einfache Herstellungsmöglichkeit dar, da der Verbindungskanal eine einfache Bohrung durch den Steuerkolben sein kann. Durch geeignete Wahl des Durchmessers kann der entlang des Verbindungskanals abfallende Differenzdruck eingestellt werden, sodass ein sicheres Schließen des Rückschlagventils beim Entlüften der Steuerkammer gewährleistet ist.

Nach einer Weiterbildung der Erfindung ist vorgesehen, dass der Steueranschluss an einem Verschlussstopfen vorgesehen ist, der die Zylinderwand der Steuerkammer abschließt.

Über den Verschlussstopfen, der als separates Bauteil in das Ventilgehäuse eingesetzt werden kann, ist das Innere des Rückschlagventils bei der Fertigung oder zur Wartung zugänglich. Bei Verwendung eines abgewinkelten Steueranschluss-Stutzens kann die Ausrichtung des Steueranschlusses durch Verdrehen des Verschlussstopfens frei gewählt werden.

Nach einer Weiterbildung der Erfindung ist vorgesehen, dass der Ventilsitz eine umlaufende geneigte, vorzugsweise unter etwa 45° angestellte Fase am Ventilkanal umfasst, und das Verschlussteil einen Dichtring in einer umlaufenden Außennut umfasst, der mit der Fase zusammenarbeitet.

Dadurch wird ein dichtes weiches Schließen des Rückschlagventils gewährleistet. Zu Fertigungszwecken ist es vorteilhaft, wenn das Verschlussteil kleinere Außenabmessungen als die Innenabmessung des Ventilsitzes hat, sodass das Verschlussteil einlassseitig durch den Ventilsitz hindurchgeschoben werden kann. Danach kann der Dichtring in die Außennut eingebracht werden, sodass das Verschlussteil mit dem Dichtring gegen den Ventilsitz arbeitet.

Nach einer Weiterbildung ist vorgesehen, dass die Fase am stirnseitigen Ende eines hohlen Auslassstutzens vorgesehen ist.

Wird der Auslassstutzen mit einem Gewinde versehen, so dient dieser zugleich als Befestigungsmittel am Druckspeicher sowie als Ventilsitz, sodass im Inneren des Ventilkanals keine spezielle Schulter als Ventilsitz ausgebildet werden muss.

Nach einer Weiterbildung ist vorgesehen, dass das Ventilgehäuse in einem axialen Teilbereich von einem hohlzylindrischen Einlassgehäuseteil dicht umschlossen wird, das den Einlass umfasst und gegenüber dem Ventilgehäuse drehbar ist.

Ein separat drehbares Einlassgehäuseteil ermöglicht eine Ausrichtung des Einlasses, was einen flexiblen Einsatz des Rückschlagventils ermöglicht.

Nach einer Weiterbildung ist vorgesehen, dass eine Außenfläche des Ventilgehäuses radial progressiv nach innen gestufte Stützschultern aufweist, wobei eine erste Stützschulter das Einlassgehäuseteil stützt und eine zweite Stützschulter des Ventilgehäuses mit einem Anschlussstutzen eines Druckspeichers zusammenarbeitet.

Werden an den Stützschultern Dichtringe vorgesehen, so bilden die Stützschultern eine einfache Möglichkeit, das Ventil dicht am Anschlussstutzen beispielsweise eines Druckspeichers zu befestigen und zugleich das Einlassgehäuseteil zu sichern.

Hinsichtlich des Verfahrens wird die Aufgabe erfindungsgemäß gelöst durch ein Verfahren zum Betreiben einer Druckluftversorgungseinheit, das folgende Schritte umfasst:
- Bereitstellen eines Druckspeichers;
- Bereitstellen eines erfindungsgemäßen Rückschlagventils, dessen Auslass mit dem Druckspeicher verbunden ist;
- Bereitstellen eines Kompressors, der mit dem Einlass des Rückschlagventils verbunden ist;
- Bereitstellen eines Druckschalters, der den Kompressor und ein Entlüftungsventil ansteuert, das mit dem Steueranschluss des Rückschlagventils verbunden ist;
- Schließen des Entlüftungsventils bei Unterschreiten eines Mindestdrucks im Druckspeicher, sodass sich in der Steuerkammer des Rückschlagventils durch den Kompressor ein Druck aufbaut, der das Rückschlagventil zum Druckspeicher hin öffnet;
- Öffnen des Entlüftungsventils bei Erreichen eines Solldrucks im Druckspeicher, sodass das Verschlussteil des Rückschlagventils geschlossen wird.

Da der Steueranschluss des Eigenmedium-betätigten Rückschlagventils zugleich zum Entlüften der Druckleitungen verwendet wird, ist das Rückschlagventil durch den Druckschalter steuerbar. Dabei ist dank der Eigenbetätigung ein sicheres leises Öffnen und Schließen des Ventils gewährleistet, da vom Kompressor erzeugte Druckschwankungen nicht zu einem Schwingen des Verschlussteils führen. Die Druckluftversorgungseinheit zeigt somit eine geringere Geräuschentwicklung.

Nach einer Weiterbildung ist vorgesehen, dass zwischen Kompressor und Rückschlagventil ein Trockner vorgesehen ist, der ebenfalls über das Entlüftungsventil entlüftet wird.

Der Trockner trocknet die vom Kompressor kommende Druckluft, sodass sich im Druckspeicher nur getrocknete und gereinigte Druckluft befindet, die zur Verwendung im dentalmedizinischen Bereich geeignet ist. Dadurch, dass der Trockner und das Rückschlagventil am Druckspeicher über dasselbe Entlüftungsventil entlüftet werden, muss am Druckschalter kein weiteres Entlüftungsventil vorgesehen werden. Besonders vorteilhaft ist in diesem Zusammenhang eine Rückströmsperre im Verbindungskanal, da vom Entlüftungsventil auch Bereiche des Trockners entlüftet werden, die feuchte Luft enthalten und daher durch die Rückströmsperre gewährleistet werden muss, dass keine feuchte Luft durch Steueranschluss über den Verbindungskanal in den Ventilkanal und somit in den Druckspeicher gelangt.

Nach einer Weiterbildung des Verfahrens ist vorgesehen, dass der Druckschalter das Entlüftungsventil in Abhängigkeit von Signalen eines Drucksensors, einer Zeitsteuerung und/oder eines Drehzahlsensors steuert.

So kann beispielsweise beim Anlaufen des Kompressors das Entlüftungsventil noch geöffnet sein und erst bei Erreichen einer bestimmten Drehzahl oder nach einer gewissen Zeit das Entlüftungsventil geschlossen werden. Falls die Drehzahl beispielsweise aufgrund einer Fehlfunktion des Kompressors nicht nach einer bestimmten Zeit erreicht wird, kann der Druckschalter das Entlüftungsventil geöffnet halten und den Kompressor wieder ausschalten.

Nachstehend wird die Erfindung anhand von Ausführungsbeispielen unter Bezugnahme auf die Zeichnungen näher erläutert. In diesen zeigen:
- Figur 1: eine perspektivische Ansicht eines Eigenmedium-betätigten Rückschlagventils;
- Figur 2: einen Längsschnitt durch das an einen Druckspeicher angeschlossene Rückschlagventil in geöffnetem Zustand;
- Figur 3: einen Längsschnitt durch das an einen Druckspeicher angeschlossene Rückschlagventil in geschlossenem Zustand;
- Figur 4: einen schematischen Fluidschaltplan einer Druckluftversorgungseinheit.

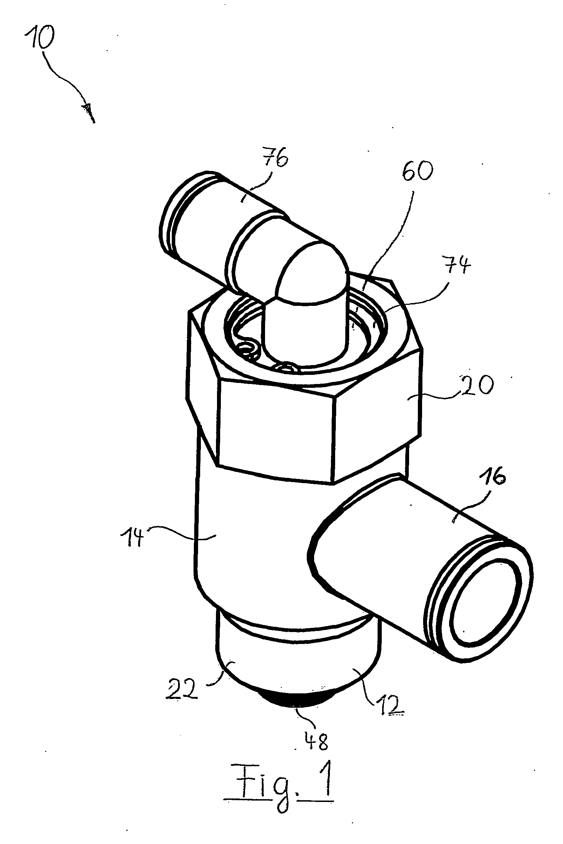

Figur 1 zeigt ein insgesamt mit 10 bezeichnetes Rückschlagventil mit einem Ventilgehäuse 12, das ein Einlassgehäuseteil 14 drehbar trägt, an welchem ein radial nach außen zeigender Rohrstutzen 16 vorgesehen ist, der den Einlass für das Rückschlagventil 10 darstellt.

Das Ventilgehäuse 12 hat eine im Wesentlichen hohlzylindrische Form, die einen Ventilkanal 18 vorgibt und weist an seinem in der Zeichnung oben gelegenen Ende einen Sechskant-Abschnitt 20 auf, der als Einschraubhilfe dient.

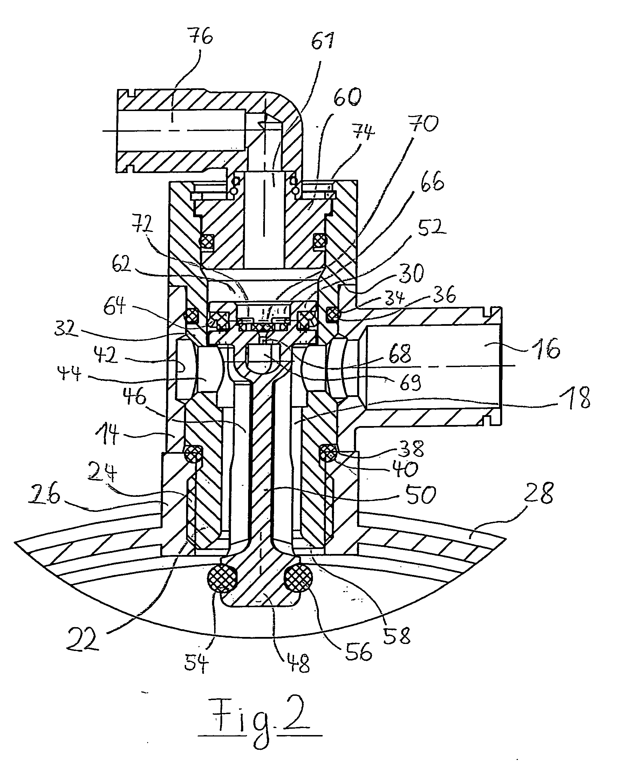

Ausgehend vom Sechskant-Abschnitt 20 verjüngt sich das Ventilgehäuse 12 über zwei Schultern zu einem Gewindestutzen 22 hin, der den Auslass des Rückschlagventils 10 bildet. Der Gewiridestutzen 22 ist mit einem Außengewinde 24 in einen Anschlussstutzen 26 eines Druckspeichers 28 eingeschraubt, wie aus Figur 2 ersichtlich.

Dabei ist am Ventilgehäuse 12 eine erste radial nach innen gestufte Schulter 30 vorgesehen, an welcher ein verjüngter Mittelabschnitt 32 beginnt, der vom hohlzylindrischen Einlassgehäuseteil 14 umschlossen ist. Am Mittelabschnitt 32 ist nahe der Schulter 30 eine umlaufende Außennut 34 vorgesehen, in welcher ein Dichtring 36 angeordnet ist, sodass sich das Einlassgehäuseteil 14 an der Schulter 30 abstützten kann und dabei dicht aufgenommen ist.

Eine zweite radial nach innen gestufte Schulter 38 ist als Übergang vom Mittelabschnitt 32 zum Gewindestutzen 22 vorgesehen. An dieser zweiten Schulter 38 liegt ein weiterer Dichtring 40 an, der beim Einschrauben des Rückschlagventils 10 so weit komprimiert wird, dass das Einlassgehäuseteil 14 zwischen der ersten Schulter 30 und dem Anschlussstutzen 26 des Druckspeichers 28 eingespannt wird und das Ventilgehäuse 12 zur Umgebung hin abgedichtet ist.

Der Rohrstutzen 16 des Einlassgehäuseteiles 14 steht mit einer umlaufenden Innennut 42 in Verbindung, die im Inneren des Einlassgehäuseteils 14 umläuft und über Radialbohrungen 44 im Mittelabschnitt 32 mit dem Ventilkanal 18 kommuniziert. Dadurch wird eine fluidische Verbindung vom Rohrstutzen 16 zum Ventilkanal 18 in jeder Drehlage des Einlassgehäuseteils 14 bezüglich des Ventilgehäuses 12 gewährleistet.

In einem nicht gezeigten weiteren Ausführungsbeispiel ist anstatt oder zusätzlich zur Innennut 42 des Einlassgehäuseteils im Mittelabschnitt 32 des Ventilgehäuses 12 eine Außennut vorgesehen, die die Radialbohrungen 44 verbindet.

Im Inneren des Ventilgehäuses 12 ist ein verschiebbares Steuerelement 46 angeordnet, das ein Verschlussteil 48, einen Stößel 50 und einen Steuerkolben 52 umfasst.

Das Steuerelement 46 ist so im Ventilkanal 18 angeordnet, dass das Verschlussteil 48 aus dem Gewindestutzen 22 heraus und somit in den Druckspeicher 28 hinein ragt. Am Verschlussteil 48 ist ferner eine umlaufende Außennut 54 vorgesehen, in welche nach dem Einbringen des Steuerelements 46 ins Innere des Ventilgehäuses 12 ein Ventildichtring 56 eingesetzt wird, der über die Außennut 54 radial übersteht und mit dem Endabschnitt des Gewindestutzens 22 als Ventilsitz zusammenarbeitet. Der Gewindestutzen 22 weist dazu stirnseitig eine 45° nach innen und oben geneigte umlaufenden Fase 58 auf.

Ausgehend von dem Verschlussteil 48 zeigt der Stößel 50 in den Ventilkanal 18 und trägt an seinem vom Verschlussteil 48 abgelegenen Ende den Steuerkolben 52, der zusammen mit einer zylindrischen Innenwand des Ventilgehäuses 12 und einem Verschlussstopfen 60 eine Steuerkammer 62 begrenzt.

Für eine dichte Aufnahme des Steuerkolbens 52 in der zylindrischen Wand sorgt eine um den Steuerkolben 52 umlaufende Lippendichtung 64 in einer Umfangsnut des Steuerkolbens 52.

Der Steuerkolben 52 weist ferner auf seiner Stirnseite eine Senkbohrung 66 auf, an deren Grund eine Drosselbohrung 68 mit einem kleinen Durchmesser vorgesehen ist. Ein transversaler Durchgang 69 in einem oberen Kopf des Stößels 50 bildet zusammen mit der Drosselbohrung 68 einen Verbindungskanal zwischen dem Ventilkanal 18 und der Steuerkammer 62.

Der Boden der Senkbohrung 66 wird von einem Ventilplättchen 70 überdeckt, das mit Hilfe eines unter radialer Vorspannung stehenden geschlitzten Fixierringes 72 unter axialem Spiel über der Drosselbohrung 68 gehalten wird. Das Ventilplättchen 70 bildet zusammen mit dem Boden der Senkbohrung 66 eine in Richtung zur Steuerkammer öffnendes Rückschlagventil, also eine Sperre, die ein Zurückströmen von Fluid ir entgegengesetzter Richtung (zum Ventilkanal hin) verhindert.

Der Verschlussstopfen 60, der ebenfalls mit einem Radialspringring 74 axial gesichert ist, weist mittig eine Bohrung 61 auf, die über einen in Figur 2 abgewinkelt dargestellten Steueranschlussstutzen 76, der aber auch gerade ausgeführt sein kann, mit einem hier nicht dargestellten Vorsteuerventil in Verbindung steht.

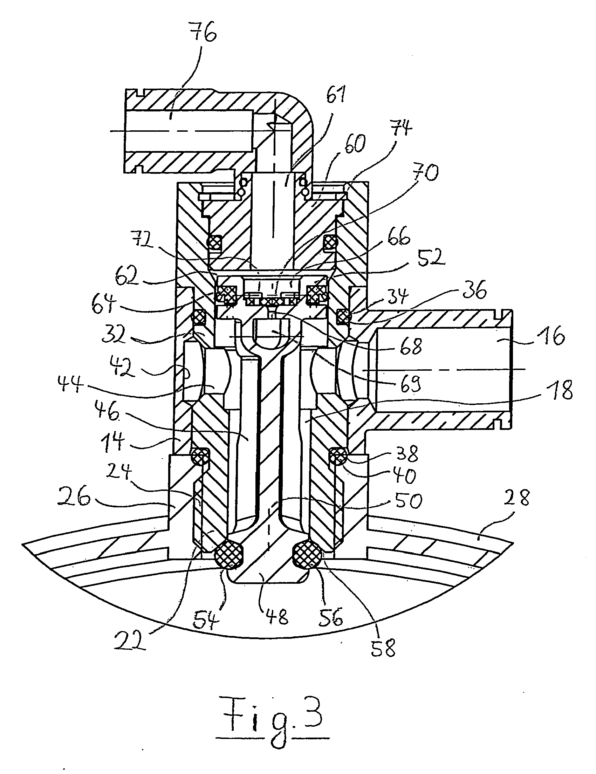

Figur 3 zeigt das Rückschlagventil 10 mit dem Steuerelement 46 in einer geschlossenen Stellung, bei welcher der Ventildichtring 56 dicht an der schrägen Fase 58 anliegt.

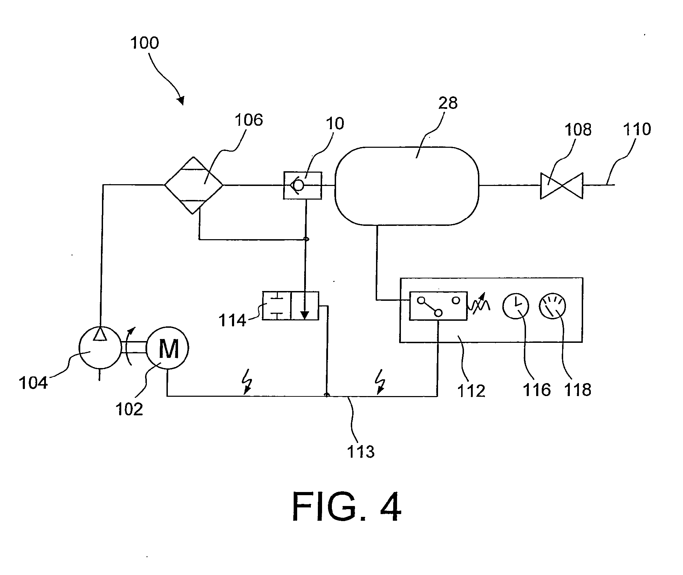

Figur 4 zeigt schematisch die Verwendung des Rückschlagventils 10 in einer Druckluftversorgungseinheit 100.

Ein von einem Motor 102 angetriebener Kompressor 104 ist über einen Lufttrockner 106 und das Rückschlagventil 10 mit dem Druckspeicher 28 verbunden.

An den Druckspeicher 28 ist eine Absperrarmatur 108 angeschlossen, die über eine Druckleitung 110 mit nicht gezeigten Verbrauchern verbunden ist.

Ein Fenster-Druckschalter 112 ist mit dem Druckspeicher 28 verbunden. Er schließt bei Unterschreiten eines unteren Solldruckes und öffnet bei Überschreiten eines oberen Solldruck für den Druckspeicher 28 und steuert so über eine e-lektrische Leitung 113 den Motor 102 bedarfsgemäß. Ebenfalls über die Leitung 113 steuert der Druckschalter 112 ein Entlüftungsventil 114 an, das an den Steueranschlussstutzen 76
des Rückschlagventils 10 und an einen Entlüftungsanschluss des Lufttrockners 106 angeschlossen ist. Das Entlüftungsventil 114 kann vom Druckschalter 112 entweder geschlossen werden oder zur Umgebung hin geöffnet werden.

Zur Steuerung des Motors 102 und des Entlüftungsventils 114 kann der Druckschalter 112 zudem Informationen eines Zeitgebers 116 und eines Drehzahlsensors 118 heranziehen, der die Drehzahl des Motors 102 misst.

Im vorliegenden Ausführungsbeispiel wird das Entlüftungsventil 114 elektromagnetisch von einem elektromechanischen Druckschalter 112 betätigt.

Nach einem nicht gezeigten Ausführungsbeispiel kann der Druckschalter 112 das Entlüftungsventil jedoch auch direkt mechanisch betätigen. Ferner kann der Druckschalter 112 auch als elektronische Steuerung ausgebildet sein.

Wie aus dem gezeigten Ausführungsbeispiel ersichtlich umfasst das Rückschlagventil 10 keine auf das Verschlussteil 48 wirkende Feder. Nach einem nicht gezeigten Ausführungsbeispiel kann jedoch auch eine Feder vorgesehen sein, um entsprechend der anstehenden Drücke eine Vorspannung des Verschlussteils 48 zu erzeugen.

Die Druckluftversorgungseinheit 100 arbeitet wie folgt:
Das Entlüftungsventil 114 wird vom Druckschalter 112 geschlossen und der Kompressor 104 angefahren, sobald der untere Solldruck im Druckspeicher 28 unterschritten ist. Über den Einlass des Rückschlagventils 10 tritt verdichtete Druckluft in den Ventilkanal 18 ein und gelangt bei zunächst noch geschlossenem Rückschlagventil 10 über den Durchgang 69 im Steuerkolben 52 und die Drosselbohrung 68 in die Steuerkammer 62, wo sich wegen des geschlossenen Entlüftungsventils 114 ein Druck aufbaut.

Da der Steuerkolben 52 aufgrund des Stößels 50 auf der Seite des Ventilkanals 18 eine kleinere aktive Druckfläche aufweist als bei der Steuerkammer 62, wird das Steuerelement 46 in eine Offenstellung in Richtung des Druckspeichers 28 bewegt. Unabhängig von eventuell auftretenden einlassseitigen Druckschwankungen bleibt das Verschlussteil 48 durch die Differenzdruckbeaufschlagung zwangsweise sicher geöffnet.

Wird der obere Solldruck im Druckspeicher 28 erreicht, öffnet der Druckschalter 112 das Entlüftungsventil 114 und stoppt den Kompressor 104. Das Öffnen des Entlüftungsventils 114 führt zu einem schnellen Druckabfall in der Steuerkammer 62, da die Drosselbohrung 68 die Fluidzufuhr begrenzt. Dadurch überwiegt die nach oben in Schließrichtung wirkende Kraft auf den Steuerkolben 52, und das Steuerelement 46 wird in eine Schließstellung bewegt, bei der das Verschlussteil 48 mit dem Ventildichtring 56 an der schrägen Fase 58 anliegt und somit das Rückschlagventil 10 schließt.

Bedingt durch den Ventildichtring 56 am Verschlussteil 48 ist das Schließen des Rückschlagventils 10 nahezu unhörbar. Ein eventuell erwünscht hörbares Schaltgeräusch beim Öffnen kann bei geändertem Interesse durch geeignete Dämpfungselemente vermindert werden.

## Patentansprüche

1. Rückschlagventil (10) mit
- einem Ventilgehäuse (12), welches einen Einlass (16), einen Auslass (22) und einen Ventilkanal (18) aufweist, der einen Ventilsitz (58) umfasst und den Einlass (16) mit dem Auslass (22) verbindet,
- einem Verschlussteil (48), das mit dem Ventilsitz (58) zusammenarbeitet, und
- einem Stößel (50), der das Verschlussteil (48) trägt,wobei
- ein vom Verschlussteil (48) abgelegenes Ende des Stößels (50) einen Steuerkolben (52) trägt und
- der Steuerkolben (52) zusammen mit einer Zylinder- wand eine Steuerkammer (62) begrenzt,**dadurch gekennzeichnet, dass**
- die Steuerkammer (62) mit einem Steueranschluss (76) zum Entlüften der Steuerkammer (62) in Verbindung steht, und
- die Steuerkammer (62) über einen Verbindungskanal (66, 68), dessen Querschnitt so gewählt ist, dass er als Drossel wirkt, mit dem Ventilkanal (18) verbunden ist, wodurch beim Entlüften über den Steueranschluss (76) der Druck in der Steuerkammer (62) schneller abfällt als im Ventilkanal (18).

2. Rückschlagventil nach Anspruch 1, **dadurch gekennzeichnet, dass** der Steuerkolben (52) mit seiner stößelseitigen Stirnfläche mit dem Ventilkanal (18) kommuniziert.

3. Rückschlagventil nach Anspruch 1 oder 2, **dadurch gekennzeichnet, dass** der Verbindungskanal (66, 68) eine Rückströmsperre (70, 72) aufweist, die ein Rückströmen von Medium von der Steuerkammer (62) in den Ventilkanal (18) verhindert.

4. Rückschlagventil nach einem der vorherigen Ansprüche, **dadurch gekennzeichnet, dass** der Verbindungskanal (66, 68) die Steuerkammer (62) über den Steuerkolben (52) mit dem Ventilkanal (18) verbindet.

5. Rückschlagventil nach einem der vorherigen Ansprüche, **dadurch gekennzeichnet, dass** der Steueranschluss (76) an einem Verschlussstopfen (60) vorgesehen ist, der die Zylinderwand der Steuerkammer (62) abschließt.

6. Rückschlagventil nach einem der vorherigen Ansprüche, **dadurch gekennzeichnet, dass** der Ventilsitz eine umlaufende geneigte, vorzugsweise unter etwa 45° angestellte Fase (58) am Ventilkanal (18) umfasst, und das Verschlussteil (48) einen Dichtring (56) in einer umlaufenden Außennut (54) umfasst, der mit der Fase (58) zusammenarbeitet.

7. Rückschlagventil nach Anspruch 6, **dadurch gekennzeichnet, dass** die Fase (58) am stirnseitigen Ende eines hohlen Auslassstutzens (22) vorgesehen ist.

8. Rückschlagventil nach einem der vorherigen Ansprüche, **dadurch gekennzeichnet, dass** das Ventilgehäuse (12) in einem axialen Teilbereich (32) von einem hohlzylindrischen Einlassgehäuseteil (14) dicht umschlossen wird, das den Einlass (16) umfasst und gegenüber dem Ventilgehäuse (12) drehbar ist.

9. Rückschlagventil nach Anspruch 8, **dadurch gekennzeichnet, dass** eine Außenfläche des Ventilgehäuses (12) radial progressiv nach innen gestufte Stützschultern (30, 38) aufweist, wobei eine erste Stützschulter (30) das Einlassgehäuseteil (14) stützt und eine zweite Stützschulter (38) des Ventilgehäuses (12) mit einem Anschlussstutzen (26) eines Druckspeichers (28) zusammenarbeitet.

10. Verfahren zum Betreiben einer Druckluftversorgungseinheit (100), das folgende Schritte umfasst:
- Bereitstellen eines Druckspeichers (28);
- Bereitstellen eines Rückschlagventils (10) nach einem der vorherigen Ansprüche, dessen Auslass (22) mit dem Druckspeicher (28) verbunden ist;
- Bereitstellen eines Kompressors (102, 104), der mit dem Einlass (16) des Rückschlagventils (10) verbunden ist;
- Bereitstellen eines Druckschalters (112), der den Kompressor (102, 104) und ein Entlüftungsventil (114) ansteuert, das mit dem Steueranschluss (64) des Rückschlagventils (10) verbunden ist;
- Schließen des Entlüftungsventils (114) bei Unterschreiten eines Mindestdrucks im Druckspeicher, sodass sich in der Steuerkammer (62) des Rückschlagventils (10) durch den Kompressor (102, 104) ein Druck aufbaut, der das Rückschlagventil (10) zum Druckspeicher (28) hin öffnet;
- Öffnen des Entlüftungsventils (114) bei Erreichen eines Solldrucks im Druckspeicher (28), sodass das Verschlussteil (48) des Rückschlagventils (10) geschlossen wird.

11. Verfahren nach Anspruch 10, **dadurch gekennzeichnet, dass** zwischen Kompressor (102, 104) und Rückschlagventil (10) ein Trockner (106) vorgesehen ist, der ebenfalls über das Entlüftungsventil (114) entlüftet wird.

12. Verfahren nach Anspruch 10 oder 11, **dadurch gekennzeichnet, dass** der Druckschalter (112) das Entlüftungsventil (114) in Abhängigkeit von Signalen eines Drucksensor, einer Zeitsteuerung (116) und/oder eines Drehzahlsensors (118) steuert.

## Claims

1. A check valve (10) comprising
- a valve housing (12), which has an inlet (16), an outlet (22) and a valve channel (18), which comprises a valve seat (58) and connects the inlet (16) to the outlet (22),
- a closing part (48), which cooperates with the valve seat (58), and
- a tappet (50), which bears the closing part (48), wherein
- an end of the tappet (50), which is remote from the closing part (48), bears a control piston (52) and
- the control piston (52), together with a cylinder wall, delimits a control chamber (62), **characterized in that**
- the control chamber (62) is in connection with a control connection (76) for venting the control chamber (62), and
- the control chamber (62) is connected to the valve channel (18) via a connecting channel (66, 68), whose cross-section is configured such that it acts as a throttle, whereby during venting via the control connection (76) the pressure in the control chamber (62) drops faster than in the valve channel (18).

2. The check valve according to claim 1, **characterized in that** the control piston (52) communicates by its tappet-side end face with the valve channel (18).

3. The check valve according to claim 1 or claim 2, **characterized in that** the connecting channel (66, 68) has a backflow barrier (70, 72), which prevents a backflow of a fluid from the control chamber (62) into the valve channel (18).

4. The check valve according to one of the preceding claims, **characterized in that** the connecting channel (66, 68) connects the control chamber (62) to the valve channel (18) via the control piston (52).

5. The check valve according to one of the preceding claims, **characterized in that** the control connection (76) is arranged on a closing plug (60), which delimits the cylinder wall of the control chamber (62).

6. The check valve according to one of the preceding claims, **characterized in that** the valve seat comprises a circumferential, inclined bevel (58), preferably inclined at about 45°, on the valve channel (18), and the closing part (48) comprises a sealing ring (56) received in a circumferential outer groove (54), which cooperates with the bevel (58).

7. The check valve according to claim 6, **characterized in that** the bevel (58) is provided on a front end of a hollow outlet stub (22).

8. The check valve according to one of the preceding claims, **characterized in that** the valve housing (12) is leak-tightly surrounded in an axial partial region (32) by a hollow-cylindrical inlet housing part (14), which comprises the inlet (16) and is rotatable relative to the valve housing (12).

9. The check valve according to claim 8, **characterized in that** an outer surface of the valve housing (12) has supporting shoulders (30, 38) which are stepped radially progressively inwards, wherein a first supporting shoulder (30) supports the inlet housing part (14), and a second supporting shoulder (38) of the valve housing (12) cooperates with a connection stub (26) of a pressure accumulator (28).

10. A method for operating a compressed-air supply unit (100), comprising the following steps:
- providing a pressure accumulator (28);
- providing a check valve (10) according to one of the preceding claims, with its outlet (22) connected to the pressure accumulator (28);
- providing a compressor (102, 104) which is connected to the inlet (16) of the check valve (10);
- providing a manometric switch (112), which controls the compressor (102, 104) and a vent valve (114), which is connected to the control connection (64) of the check valve (10);
- closing the vent valve (114) when a pressure in the pressure accumulator falls below a minimum pressure, so that via the compressor (102, 104) a pressure builds up in the control chamber (62) of the check valve (10), which pressure opens the check valve (10) towards the pressure accumulator (28);
- opening the vent valve (114) when a desired pressure in the pressure accumulator (28) is reached, so that the closing part (48) of the check valve (10) is closed.

11. The method according to claim 10, **characterized in that** a drier (106) is arranged between compressor (102, 104) and check valve (10), which drier is also vented via the vent valve (114).

12. The method according to claim 10 or claim 11, **characterized in that** the manometric switch (112) controls the vent valve (114) as a function of signals provided by a pressure sensor, a time control (116) and/or a rotational speed sensor (118).

## Revendications

1. Clapet antiretour (10) comprenant
- un carter (12) comportant une admission (16), une sortie (22) et un canal de distribution (18) qui est muni d'un siège (58) dudit clapet, et raccorde ladite admission (16) à ladite sortie (22),
- une pièce obturatrice (48) coopérant avec ledit siège (58) du clapet, et
- un coulisseau (50) portant ladite pièce obturatrice (48), sachant
- qu'une extrémité dudit coulisseau (50), éloignée de ladite pièce obturatrice (48), porte un piston de commande (52) et
- que ledit piston de commande (52) délimite une chambre de commande (62) en association avec une paroi cylindrique, **caractérisé par le fait que**
- la chambre de commande (62) est en liaison avec un raccord de commande (76), en vue de désaérer ladite chambre de commande (62), et
- ladite chambre de commande (62) est raccordée au canal de distribution (18) par l'intermédiaire d'un canal de jonction (66, 68) dont la section transversale est choisie de manière qu'il agisse comme un étranglement, de telle sorte que la pression chute plus rapidement dans ladite chambre de commande (62), que dans ledit canal de distribution (18), au cours du désaérage s'opérant par l'intermédiaire du raccord de commande (76).

2. Clapet antiretour selon la revendication 1, **caractérisé par le fait que** le piston de commande (52) est en communication avec le canal de distribution (18) par sa face extrême située côté coulisseau.

3. Clapet antiretour selon la revendication 1 ou 2, **caractérisé par le fait que** le canal de jonction (66, 68) est pourvu d'un verrou antireflux (70, 72), qui empêche un reflux de fluide depuis la chambre de commande (62) jusque dans le canal de distribution (18).

4. Clapet antiretour selon l'une des revendications précédentes, **caractérisé par le fait que** le canal de jonction (66, 68) relie la chambre de commande (62) au canal de distribution (18) par l'intermédiaire du piston de commande (52).

5. Clapet antiretour selon l'une des revendications précédentes, **caractérisé par le fait que** le raccord de commande (76) est prévu sur un bouchon obturateur (60) qui obture la paroi cylindrique de la chambre de commande (62).

6. Clapet antiretour selon l'une des revendications précédentes, **caractérisé par le fait que** le siège dudit clapet inclut, au niveau du canal de distribution (18), un chanfrein périphérique incliné (58) ménagé, de préférence, à environ 45°, la pièce obturatrice (48) incluant, dans une rainure extérieure périphérique (54), une bague d'étanchement (56) qui coopère avec ledit chanfrein (58).

7. Clapet antiretour selon la revendication 6, **caractérisé par le fait que** le chanfrein (58) est prévu à l'extrémité frontale d'un manchon creux de sortie (22).

8. Clapet antiretour selon l'une des revendications précédentes, **caractérisé par le fait que** le carter (12) dudit clapet est ceinturé de manière étanche, dans une région partielle axiale (32), par une partie cylindrique creuse (14) formant carter d'admission, incluant l'admission (16) et apte à tourner par rapport audit carter (12) du clapet.

9. Clapet antiretour selon la revendication 8, **caractérisé par le fait qu'**une surface extérieure du carter (12) dudit clapet présente des épaulements d'appui (30, 38) à étagement progressif vers l'intérieur, dans le sens radial, sachant qu'un premier épaulement d'appui (30) procure un appui à la partie (14) formant carter d'admission, et qu'un second épaulement d'appui (38) dudit carter (12) du clapet coopère avec un manchon de raccordement (26) d'un accumulateur de pression (28).

10. Procédé d'actionnement d'une unité (100) d'alimentation en air comprimé, incluant les étapes suivantes :
- apprêtage d'un accumulateur de pression (28) ;
- apprêtage d'un clapet antiretour (10) conforme à l'une des revendications précédentes, dont la sortie (22) est raccordée audit accumulateur de pression (28) ;
- apprêtage d'un compresseur (102, 104) raccordé à l'admission (16) dudit clapet antiretour (10) ;
- apprêtage d'un commutateur de pression (112) qui active ledit compresseur (102, 104) et une vanne de ventilation (114) reliée au raccord de commande (76) dudit clapet antiretour (10) ;
- fermeture de ladite vanne de ventilation (114) en cas de dépassement négatif d'une pression minimale dans l'accumulateur de pression, de telle sorte qu'il se développe dans la chambre de commande (62) du clapet antiretour (10), sous l'action dudit compresseur (102, 104), une pression ouvrant ledit clapet antiretour (10) en direction dudit accumulateur de pression (28) ;
- ouverture de ladite vanne de ventilation (114) à l'instant auquel une pression de consigne est atteinte, dans ledit accumulateur de pression (28), de manière à impliquer une fermeture de la pièce obturatrice (48) dudit clapet antiretour (10).

11. Procédé selon la revendication 10, **caractérisé par** la présence, entre le compresseur (102, 104) et le clapet antiretour (10), d'un sécheur (106) qui est pareillement désaéré par l'intermédiaire de la vanne de ventilation (114).

12. Procédé selon la revendication 10 ou 11, **caractérisé par le fait que** le commutateur de pression (112) pilote la vanne de ventilation (114) en fonction de signaux d'un détecteur de pression, d'une minuterie de commande (116) et/ou d'un capteur (118) de vitesses angulaires.
